# EUROPÄISCHE PATENTSCHRIFT

(11) **EP 3 107 704 B1**
(45) Veröffentlichungstag und Bekanntmachung des Hinweises auf die Patenterteilung: **24.03.2021**
(21) Anmeldenummer: 15707306.5
(22) Anmeldetag: 19.02.2015
(51) Int. Cl.: B29C 44/12, B29C 44/34

(54) **MEHRSCHICHTIGER FORMKÖRPER FÜR FAHRZEUGINNENAUSSTATTUNGEN SOWIE VERFAHREN ZUR HERSTELLUNG SOLCHER FORMKÖRPER**
MULTI-LAYERED SHAPED BODY FOR INTERNAL VEHICLE FITTINGS AND METHOD FOR PRODUCING SUCH SHAPED BODIES
CORPS MOULÉS MULTICOUCHES DESTINÉS AUX ÉQUIPEMENTS INTÉRIEURS DE VÉHICULES ET PROCÉDÉ DE FABRICATION DUDIT CORPS MOULÉ

(30) Priorität: 19.02.2014 DE 102014203013; 26.02.2014 DE 102014002564
(43) Veröffentlichungstag der Anmeldung: 28.12.2016
(60) Teilanmeldung: 20211286.8
(73) Patentinhaber: Shanghai Yanfeng Jinqiao Automotive Trim Systems Co., Ltd., Shanghai 201206 (CN)
(72) Erfinder: THIELHORN, Peter, 45470 Mühlheim a. d. Ruhr (DE); KLUSMEIER, Werner, 32312 Lübbecke (DE); BRÜCKNER, Hubert, 40699 Erkrath (DE)
(74) Vertreter: Trinks, Ole
(86) Internationale Anmeldenummer: PCT/EP2015/053475
(87) Internationale Veröffentlichungsnummer: WO 2015/124658

(56) Entgegenhaltungen:
- EP-A2- 0 337 183
- DE-C1- 3 838 145
- US-A- 4 758 294
- US-A- 5 133 912
- US-A1- 2013 004 702

## Beschreibung

Die vorliegende Erfindung betrifft ein Verfahren zur Herstellung von mehrschichtigen Formkörpern gemäß dem unabhängigen Patentanspruch 1. Darüber hinaus bezieht sich die vorliegende Erfindung auf einen Formkörper, welcher durch das erfindungsgemäße Verfahren herstellbar ist.

Das Dokument US 5 133 912 [Bandschnitt] zur Herstellung einer zusammenhängenden Deckschicht bestehend aus zwei Einzelschichten.

Das Dokument DE 38 38 145 C1 betrifft ein Verfahren zum flächenhaft erfolgenden Verbinden eines Abdeckbands mit Stofflagen zu beiden Seiten des Nahtüberstands einer die Stofflagen miteinander verbindenden, als Fadennaht ausgebildeten Kantennaht.

Das Dokument US 4 758 294 A betrifft ein Verfahren zur Herstellung eines Gegenstands mit Schaumstoffrücken.

Das Dokument US 2013/004702 A1 betrifft ein Verbundteil mit einer Dekorhaut mit einem ersten und einem zweiten Abschnitt und einem Halteprofil, wobei der erste und zweite Abschnitt durch eine Naht miteinander verbunden sind und ein Teilbereich der Dekorhaut mit dem Halteprofil verbunden ist. Dabei ist insbesondere vorgesehen, dass der Teilbereich der Dekorhaut im Bereich der Naht mit dem Halteprofil stoffschlüssig verbunden ist.

Das Dokument DE 93 05 017 U1 betrifft ein Verkleidungsteil, bei dem ein Bezugsstoff mit einem Schaum weitestgehend hinterschäumt ist. Der Bezugsstoff ist flächig einseitig mit einer im Wesentlichen luftundurchlässigen Trägerfolie fest verbunden, und der Bezugsstoff ist mit der elastischen Trägerfolie zu einem Formteil mit dem Bezugsstoff als Sichtseite verformt. Insbesondere ist dabei vorgesehen, dass das Formteil auf Seite der Trägerfolie mit Schaumstoff hinterschäumt ist.

Neben dem Design einer Fahrzeugkarosserie, welches zumeist als erstes in das Auge des Betrachters fällt, ist die Gestaltung des Fahrzeuginnenraumes ein wesentlicher Faktor der modernen Fahrzeugentwicklung. Hierbei wird nicht nur auf die Optik der einzelnen Interieur-Elemente Wert gelegt; vielmehr spielt auch die Haptik und das Zusammenspiel zwischen Material, Form und Farben der Innenausstattung eine entscheidende Rolle. Hochwertige Fahrzeuginnenräume überzeugen vor allem durch ihr Design und erstklassig verarbeitete Materialien. Dabei gehören bspw. Lederausstattungen längst nicht mehr zum Premiumsegment, sondern finden sich zunehmend auch in Fahrzeugen des mittleren Preissegments wieder. Insbesondere natürliches Leder, als natürlicher Werkstoff stellt sehr hohe Anforderungen an den Verarbeitungsablauf. Dabei treten immer wieder Probleme beim sogenannten Kaschieren von Kunststoffteilen mit Leder auf. So kommt es immer wieder zu Schwierigkeiten bei der Positionierung der Nähte sowie bei der Verbindung des Ledermaterials mit dem vorwiegend weichen Kunststoffuntergrund.

Um eine schnelle und einfache Verbindung eines Trägermaterials mit dem Bezugsmaterial (z.B. Ledermaterial) zu erreichen, ist es bekannt das Bezugsmaterial in einem Formwerkzeug mit einem Kunststoff zu hinterschäumen. Typische Probleme, die bei dieser Hinterschäumung von Bezugsmaterialien wie Leder regelmäßig zu einer hohen Ausschussquote führen, sind der Austritt von geschäumten Kunststoffmaterial durch die Nähte des Bezugsmaterials, der orangen Hauteffekt der Nahtstelle, die Ausrichtung der Nähte gegenüber dem Kunststoffuntergrund sowie Haftungsprobleme. Darüber hinaus ist es bekannt, dass die verschiedenen Komponenten der mehrschichtigen Formkörper unter verschiedenen klimatischen Bedingungen nicht dimensionsstabil sind.

Das oben bereits angedeutete, konventionelle Hinterschäumen ist ein Verfahren mit besonders hohem Arbeitsaufwand, da eine Vielzahl von Prozessschritten benötigt wird. Unter anderem müssen die Nähte des Bezugsmaterials, vor dem Hinterschäumen, so abgedichtet werden, dass der geschäumte Kunststoff, welcher auf die Rückseite des Bezugsmaterials aufgetragen wird, nicht durch die Nähte dringt, wenn das Schäumwerkzeug geschlossen und unter Druck gesetzt wird. Sollte dies nicht der Fall sein, kann das Bezugsmaterial geschädigt werden bzw. dessen Haptik und Erscheinungsbild verschlechtert werden.

Zum Abdichten der Nähte ist es aus dem Stand der Technik beispielsweise bekannt, diese durch ein Klebeband, welches auf der Rückseite des Beschichtungsmaterials angebracht wird, zu schützen. Es hat sich jedoch in der Praxis gezeigt, dass die Nähte des Beschichtungsmaterials durch ein Klebeband oftmals nicht genügend abgedichtet werden können. Als Abhilfemaßnahme wird in der EP 0 337 183 B1 beispielsweise eine Sperrschicht aus Polyurethan vorgeschlagen, welche an der Rückseite des Bezugsmaterials angebracht wird.

Bei der aus dem Stand der Technik bekannten Lösung hat es sich als problematisch herausgestellt, dass die Naht des Bezugsmaterials nicht ausreichend fixiert ist und beim Hinterschäumen verrutscht. Darüber hinaus wurde festgestellt, dass selbst die aus Polyurethan bestehende Sperrschicht zu einer Veränderung der Eigenschaften des Bezugsmaterials führen kann.

Auf Grundlage der oben genannten Problemstellung liegt der vorliegenden Erfindung die Aufgabe zugrunde, ein Verfahren zur Herstellung von mehrschichtigen Formkörpern anzugeben, bei welchem das Bezugsmaterial im Schäumwerkzeug derart stabilisiert wird, dass ein Verrutschen während des Hinterschäumens nicht möglich ist. Zusätzlich soll durch die Erfindung eine prozesssichere Abdichtung der Rückseite des Bezugsmaterials gewährleistet werden.

Erfindungsgemäß wird diese Aufgabenstellung durch das Verfahren gemäß dem unabhängigen Patentanspruch 1 gelöst.

Demgemäß betrifft die vorliegende Erfindung ein Verfahren zur Herstellung von mehrschichtigen Formkörpern, bei welchen auf die Rückseite eines Bezugsmaterials ein geschäumter Kunststoff aufgebracht wird. Dabei ist unter der "Rückseite" (auch Fleischseite genannt) die Seite des Bezugsmaterials zu verstehen, welche für den Betrachter des Formkörpers nicht sichtbar ist.

Im Einzelnen wird gemäß dem erfindungsgemäßen Verfahren zunächst eine selbsttragende Sperrschicht hergestellt, welche für den geschäumten Kunststoff undurchdringbar ist. Daraufhin wird das Bezugsmaterial mit zumindest einem Teilbereich seiner Rückseite auf die selbsttragende Sperrschicht derart aufgebracht und fixiert, dass ein Vorverbund zwischen der Sperrschicht und dem Bezugsmaterial entsteht. Nach dem Erzeugen des Vorverbunds wird dieser wiederum derart in ein Schäumwerkzeug eingebracht, dass die Sperrschicht zwischen dem Bezugsmaterial und einer Schäumkammer des Schäumwerkzeugs angeordnet ist. Schließlich wird geschäumter Kunststoff in die Schäumkammer des Schäumwerkzeugs eingebracht, um das durch die selbsttragende Sperrschicht abgedeckte Bezugsmaterial zu hinterschäumen.

Das erfindungsgemäße Verfahren zeichnet sich insbesondere dadurch aus, dass das Bezugsmaterial bereits vor dem Einbringen in das Schäumwerkzeug mit einer selbsttragenden Sperrschicht verbunden wird, wodurch ein Vorverbund zwischen dem Bezugsmaterial und der selbsttragenden Sperrschicht entsteht. Somit wird bereits in diesem Verfahrensstadium ein Verrutschen des Bezugsmaterials wirkungsvoll verhindert.

Die Vorteile des erfindungsgemäßen Verfahrens liegen auf der Hand: So wird durch die Anbringung des Bezugsmaterials auf einer selbsttragenden Sperrschicht erreicht, dass die unterschiedlichen Bereiche des Bezugsmaterials, bereits vor dem Einbringen in das Schäumwerkzeug, präzise positioniert werden können und ein Verrutschen des Bezugsmaterials wirkungsvoll verhindert wird. Gleichzeitig ergibt sich eine perfekte Abdeckung der Rückseite des Bezugsmaterials durch die selbsttragende Sperrschicht, weshalb Beschädigungen des Bezugsmaterials beim Hinterschäumen praktisch ausgeschlossen werden können.

Erfindungsgemäß ist insbesondere vorgesehen, dass die Sperrschicht in einer Form hergestellt wird, welche im Wesentlichen der Außenkontur des zu fertigenden Formkörpers entspricht. Speziell bei dreidimensional aufwendig herzustellenden Formkörpern - wie Instrumententafeln - kann es bei der Positionierung des Bezugsmaterials in Eckbereichen des Formkörpers zu unerwünschten Materialaufwerfungen bzw. Materialüberlagerungen kommen. Durch das Vorformen der selbsttragenden Sperrschicht lässt sich das Bezugsmaterial bereits vor dem Einbringen in das Schäumwerkzeug genau an der Außenkontur des späteren Formkörpers fixieren. Mit anderen Worten stellt die selbsttragende Sperrschicht gemäß dieser Ausführungsform, bereits vor dem Einbringen in das Schäumwerkzeug, ein Abbild des zu fertigen Formkörpers dar, auf welchem das Bezugsmaterial mit höchster Präzision positioniert und fixiert werden kann. Alternativ dazu, ist es jedoch auch denkbar, dass die Sperrschicht zunächst in einer ebenen Struktur ausgebildet ist, auf welcher das Bezugsmaterial zumindest mit Teilbereichen seiner Rückseite fixiert wird, wobei erst in einem zweiten Schritt eine Verformung des Vorverbunds aus Sperrschicht und Bezugsmaterial erfolgt, welche dazu führt, dass der Vorverbund genau auf die Außenkontur des späteren Formkörpers angepasst ist.

Vorteilhafte Weiterbildungen des erfindungsgemäßen Verfahrens sind in den abhängigen Patentansprüchen angegeben.

Gemäß einer weiteren Realisierung des erfindungsgemäßen Verfahrens wird die Sperrschicht aus einer thermisch tiefgezogenen Folie gebildet. Hierdurch werden selbsttragende Sperrschichten hergestellt, welche eine besonders hohe Steifigkeit bei relativ geringem Gewicht aufweisen. Dabei können unterschiedliche Dicken und Dichten der tiefgezogenen Folie verwendet werden. Die Sperrschicht kann beispielsweise aus Polyolefin oder Polystyrol gebildet sein. Insbesondere ist es vorteilhaft, Polystyrolfolien zu verwenden, wenn die Haptik, insbesondere die Eindruckhärte der Oberfläche des Formkörpers, relativ hart sein soll. Durch die Verwendung von Polystyrol wird ferner eine besonders hohe Dimensionsstabilität der selbsttragenden Sperrschicht erreicht. Zur Produktion weicher Formkörper ist es von Vorteil, Sperrschichten aus Polyolefin-Tiefziehfolien zu verwenden. Beispielsweise eignet sich hierzu Polypropylen, Polyethylen bzw. Polyethylenterephthalat. Aufgrund der hohen Temperaturbeständigkeit sowie des guten Preis-Leistungs-Verhältnisses ist es insbesondere bevorzugt die selbsttragende Sperrschicht aus einer geschäumten Polypropylen-Tiefziehfolie herzustellen.

Gemäß einem weiteren Aspekt des erfindungsgemäßen Verfahrens, kann die Sperrschicht selbstklebend ausgebildet sein. Mit anderen Worten ist es nicht nötig eine separate Klebeschicht, in einem weiteren Verfahrensschritt, auf die Sperrschicht aufzubringen, um das Bezugsmaterial auf der Sperrschicht zu fixieren. Die Sperrschicht ist dabei vorzugsweise derart selbstklebend ausgebildet, dass das Bezugsmaterial direkt während eines Tiefziehprozesses mit der Sperrschicht verbunden werden kann. Das heißt, das Bezugsmaterial kann mit der Sperrschicht verbunden werden, während diese gleichzeitig durch einen Tiefziehprozess in ihre gewünschte dreidimensionale Form (z.B. Außenkontur des zu fertigenden Formkörpers) gebracht wird. Hierzu ist es denkbar, dass die Sperrschicht aus einem thermisch aktivierbaren Thermoplast besteht, welcher durch den Wärmeeintrag während dem Tiefziehen seine Haftwirkung erzielt. Dies begünstigt insbesondere das Aufbringen und die Positionierung des Bezugsmaterials auf der Sperrschicht, vor dem Tiefziehen, da die Sperrschicht zu diesem Zeitpunkt noch keine Hafteigenschaften aufweist. Erst wenn ein Wärmeeintrag durch den Tiefziehprozess entsteht, erzielt die Sperrschicht ihre Haftwirkung und verbindet sich folglich mit dem Bezugsmaterial zu einem Vorverbund. Selbstverständlich ist es auch denkbar, die Sperrschicht derart selbstklebend auszubilden, dass diese bereits vor dem Tiefziehprozess eine Haftwirkung aufweist. Dementsprechend würde bereits vor dem Tiefziehen ein Vorverbund zwischen der Sperrschicht und dem Bezugsmaterial erreicht.

Alternativ zu der oben genannten Ausführungsform kann die Fixierung zwischen der Sperrschicht und dem Bezugsmaterial auch durch mindestens eine separate Klebeschicht erzeugt werden. Die Klebeschicht wird dazu insbesondere auf die selbsttragende Sperrschicht aufgebracht. Dabei kann die Klebeschicht entweder unmittelbar vor dem Erzeugen des Vorverbunds auf die Sperrschicht aufgetragen werden oder sich bereits von Anfang an auf der Oberfläche der selbsttragenden Sperrschicht befinden. Die Klebeschicht ist zumindest bereichsweise auf die selbsttragende Sperrschicht aufgebracht. Im Einzelnen ist es dabei vorgesehen, dass die Klebeschicht zumindest an den Teilen der selbsttragenden Sperrschicht vorgesehen ist, an denen die Nähte des Bezugsmaterials angebracht werden sollen. Selbstverständlich ist es alternativ auch denkbar, die gesamte selbsttragende Sperrschicht vollflächig mit einer Klebeschicht zu versehen.

Die oben bereits erwähnte Klebeschicht ist vorzugsweise derart ausgebildet, dass zunächst nur eine leichte Haftverbindung zwischen der selbsttragenden Sperrschicht und dem Bezugsmaterial entsteht. Insbesondere ist es dabei von Vorteil, die Haftverbindung so auszubilden, dass das Bezugsmaterial - im Falle einer fehlerhaften Anbringung - solange von der selbsttragenden Sperrschicht lösbar ist, bis der Vorverbund im Schäumwerkzeug hinterschäumt wird. Dementsprechend kann es sich bei der Klebeschicht bspw. um eine über eine vorbestimmbare Aktivierungstemperatur aktivierbare Klebeschicht handeln. Die Aktivierungstemperatur der Klebeschicht liegt selbstverständlich unterhalb der Schmelztemperatur der selbsttragenden Sperrschicht. Auch ist die Aktivierungstemperatur in einem Bereich, welcher einer Reaktionstemperatur des geschäumten Kunststoffs entspricht. Beispielsweise kann die Aktivierungstemperatur demnach in einem Bereich zwischen 40° C und 60° C, bevorzugt ca. 50° C, liegen, was dem Temperaturbereich entspricht, der beim Einschäumen des geschäumten Kunststoffs in das Schäumwerkzeug erreicht wird. Durch die Verarbeitungstemperatur des eingegebenen, geschäumten Kunststoffs verflüssigt sich die aufgebrachte Klebeschicht, wodurch eine endgültige Verbindung zwischen der selbsttragenden Sperrschicht und dem Bezugsmaterial erzielt wird. Gleichzeitig wird durch die Volumenvergrößerung des geschäumten Kunststoffs und den dadurch entstehenden Schaumdruck innerhalb der Schäumkammer des Schäumwerkzeugs eine entsprechende Kraft auf die Sperrschicht ausgeübt, sodass die selbsttragende Sperrschicht selbstständig auf die Rückseite des Bezugsmaterials aufgedrückt wird.

Wie oben bereits angedeutet, weist das Bezugsmaterial mindestens eine Verbindungs- und/oder Ziernaht auf. Dies ist insbesondere häufig dann der Fall, wenn Ledermaterialien als Bezugsmaterial verwendet werden. In diesem Fall hat es sich als besonders vorteilhaft herausgestellt, wenn die Fixierung des Bezugsmaterials an der Sperrschicht ausschließlich entlang des Verbindungs- bzw. Ziernaht erfolgt. Dementsprechend wird der Fixierungsaufwand minimiert und Klebematerialien eingespart. Schließlich lässt sich das Bezugsmaterial durch die ausschließliche Fixierung entlang der Verbindungs- bzw. Ziernähte einfacher und schneller an der selbsttragenden Sperrschicht befestigen.

Als Bezugsmaterial können allgemein bekannte Lederarten verwendet werden, die gegerbt, gefärbt, beschichtet, imprägniert oder anderweitig nach üblichen Verfahren behandelt sein können. Insbesondere kommen übliche Rinder-, Schaf-, Ziegen-, Schweine-, Straußen- oder Krokodilleder, bevorzugt jedoch Rinderleder in Betracht. Das Leder kann insbesondere für den Bezug von Formkörpern wie Sitzpolster, Rückenlehnen, Armlehnen, Türseitenverkleidungen oder Instrumententafeln, z.B. im Automobilbau, verwendet werden. Es können metallsalzgegerbte (z.B. Chrom, Aluminium) wie auch metallsalzfreie Leder eingesetzt werden.

Die Positionierung der Verbindungs- bzw. Ziernaht auf der Sperrschicht kann beispielsweise mit Hilfe mindestens eines Nahtschwerts und/oder mit Hilfe von optischen Sensoren erfolgen.

Gemäß einem weiteren Aspekt der Erfindung ist ein Verfahren zum Kaschieren eines Bauteils mit einer Verkleidung vorgesehen, wobei in einem ersten Verfahrensschritt eine Folie verformt wird, wobei in einem zweiten Verfahrensschritt die Verkleidung mit der geformten Folie zumindest partiell stoffschlüssig verbunden wird, wobei in einem dritten Verfahrensschritt die mit der Verkleidung verbundene Folie hinterschäumt wird.

Gegenüber dem Stand der Technik wird durch die stoffschlüssige Verbindung der Folie mit der Verkleidung die Folie derart fixiert, dass diese an einem Verrutschen gehindert wird. Beim anschließenden Hinterschäumen sorgt die Folie dann für ein Abdichten und verhindert das Austreten von Schaum, insbesondere an den Nähten der Verkleidung. Dabei ist es sogar denkbar, dass die Folie derart mit der Verkleidung verbunden ist, dass ein für die Hinterschäumung vorgesehener Schaum mit einem derart hohen Druck eingeführt werden kann, dass auf eine anschließende Verpressung von Verkleidung und geschäumtem Grundkörper verzichtet werden kann.

Vorzugsweise handelt es sich bei der Verkleidung um eine Leder- und/oder Kunstlederverkleidung, die ein Interieurbauteil, beispielsweise eine Instrumententrägertafel, eines Kraftfahrzeugteils kaschieren soll. Das kaschierte Bauteil bildet dann vorzugsweise eine Kunstleder- oder Leder-I-Tafel. Dabei ist es vorstellbar, dass die Folie partiell und/oder flächig mit der Verkleidung verbunden wird.

In einer Weiterbildung des weiteren Aspekts ist es vorgesehen, dass die mit der Verkleidung verbundene Folie im dritten Verfahrensschritt in einem Schäumwerkzeug angeordnet wird. Insbesondere ist es denkbar, dass das Verfahren zum Kaschieren des Bauteils in einen industriellen Fertigungsprozess, der beispielsweise Teil einer Fertigungsstraße ist, integriert wird. Dank der Fixierung der Folie an der Verkleidung muss dann bei der maschinellen Fertigung und Handhabe des kaschierten Bauteils nicht auf ein mögliches Verrutschen der Folie Acht gegeben werden.

In einer Weiterbildung des weiteren Aspekts ist es vorgesehen, dass die geformte Folie im zweiten Verfahrensschritt zumindest teilweise entlang einer Naht der Verkleidung oder in deren unmittelbarer Umgebung mit der Verkleidung verbunden wird. Beispielsweise genügt es, die stoffschlüssige Verbindung von Folie und Verkleidung auf für das Hinterschäumen relevante Bereiche zu begrenzen. Dadurch lässt sich auf vorteilhafte Weise der Aufwand beim stoffschlüssigen Verbinden auf das Nötigste reduzieren, ohne die Funktionalität der fixierten Folie einzuschränken. Außerdem wird der Folie beim Hinterschäumen ein wenig Spiel gelassen, wodurch bei der Formung der Folie im ersten Verfahrensschritt größere Fertigungstoleranzen zulässig sind.

In einer Weiterbildung des weiteren Aspekts ist es vorgesehen, dass die Folie im ersten Verfahrensschritt erwärmt und tiefgezogen wird, wobei die Folie im ersten Verfahrensschritt an die Form des Bauteils angepasst wird. Durch die an das Bauteil angepasste Verformung lässt sich in vorteilhafter Weise sicherstellen, dass die Folie beim Hinterschäumen keinen eigenen ungewollten Beitrag zur Formgebung des kaschierten Bauteils beisteuert. Es ist weiterhin denkbar, dass die Folie einen Schutz zwischen Schaum und Verkleidung realisiert. Ein solcher Schutz ist möglicherweise von Vorteil, wenn die Verkleidung zu einem späteren Zeitpunkt, beispielsweise zu deren Recycling, wieder von dem geschäumten Grundkörper entfernt werden soll.

In einer Weiterbildung des weiteren Aspekts ist es vorgesehen, dass zeitlich vor dem zweiten Verfahrensschritt die Verkleidung auf der Folie unter Verwendung von optischen Hilfsmitteln oder Schwertern positioniert und/oder mindestens entlang einer Naht der Verkleidung fixiert wird. Damit lässt sich die geformte Folie möglichst positionsgenau zu der Verkleidung, insbesondere zu deren Naht, anordnen, wodurch in vorteilhafter Weise die Prozesssicherheit weiter verbessert werden kann.

In einer weiteren Ausführungsform des weiteren Aspekts ist es vorgesehen, dass im zweiten Verfahrensschritt die Verkleidung und die Folie
- mittels eines Klebemittels miteinander verklebt und/oder
- mittels einer Verschmelzung miteinander verbunden werden. Beim Verschmelzen kann in vorteilhafter Weise auf zusätzliche Klebemittel verzichtet werden. Vorzugsweise werden unmittelbar vor dem zweiten Verfahrensschritt die besagten Klebemittel flächig oder punktuell auf die Folie und/oder die Verkleidung, vorzugsweise einseitig, aufgetragen.

In einer weiteren Ausführungsform des weiteren Aspekts ist es vorgesehen, dass im dritten Verfahrensschritt die Folie mit PUR-Weichschaum hinterschäumt wird.

In einer weiteren Ausführungsform ist es vorgesehen, dass eine Folie mit einer Schaumfolie und/oder einer harten Folie verwendet wird. In vorteilhafte Weise lässt sich über die Wahl der Folie die Oberflächenbeschaffenheit des kaschierten Bauteils mitbestimmen. Beispielsweise sorgt eine Schaumfolie für eine vergleichsweise weiche Oberflächenbeschaffenheit des kaschierten Bauteils gegenüber einer harten Oberflächenbeschaffenheit, wenn unterhalb der Verkleidung eine kompakte harte Folie angeordnet ist. Es ist dabei auch denkbar, dass eine Folie sich aus eine Mehrzahl unterschiedlicher Teilfolien zusammensetzt, über deren Beschaffenheit die Oberfläche des kaschierten Bauteils variiert wird. Dadurch lassen sich die kaschierten Bauteile auch an ausgefallenere Wünsche anpassen.

In einer weiteren Ausführungsform ist es vorgesehen, dass im dritten Verfahrensschritt das Klebemittel durch ein erwärmtes Schäumwerkzeug und/oder eine Reaktionstemperatur des PUR-Weichschaums aktiviert und zur Reaktion gebracht wird. Damit lässt sich eine stoffschlüssige Verbindung zeitgleich zum Hinterschäumen realisieren, wodurch in vorteilhafter Weise Zeit gespart wird.

Ein weiterer Gegenstand der vorliegenden Erfindung ist ein Werkzeug zum Kaschieren gemäß einem Verfahren, wie es oben beschrieben wurde. Ein solches Werkzeug lässt sich in vorteilhafter Weise in einer Fertigungsstraße zum Herstellen von Interieurbauteilen für ein Kraftfahrzeug integrieren. Dabei kann das Werkzeug die Zuverlässigkeit beim Kaschieren der Bauteile in vorteilhafter Weise erhöhen.

Ein weiterer Gegenstand der vorliegenden Erfindung ist ein Bauteil, vorzugsweise ein Interieurbauteil für ein Kraftfahrzeug, hergestellt mit einem Verfahren, wie es oben beschrieben wurde.

Das erfindungsgemäße Verfahren zur Herstellung mehrschichtiger Formkörper wird im Folgenden anhand der in den Figuren dargestellten exemplarischen Ausführungsformen näher dargestellt.
- FIG. 1A: ist eine schematische isometrische Ansicht eines Fahrzeuges gemäß einer exemplarischen Ausführungsform.
- FIG. 1B: ist eine schematische isometrische Teilschnittansicht eines Fahrzeuges gemäß einer exemplarischen Ausführungsform, wobei zumindest teilweise das Fahrzeuginnere sichtbar ist.
- FIG. 1C: ist eine schematische isometrische Ansicht eines Fahrzeuginneren gemäß einer exemplarischen Ausführungsform.
- FIGS. 2A und 2B: sind schematische isometrische Detailansichten des Fahrzeuginneren gemäß einer exemplarischen Ausführungsform.
- FIG. 3A: ist eine schematische isometrische Ansicht eines Formkörpers für das Fahrzeuginnere gemäß einer exemplarischen Ausführungsform.
- FIG. 3B: ist eine schematische Querschnittansicht des Formkörpers gemäß einer exemplarischen Ausführungsform.
- FIG. 4A: ist eine schematische isometrische Ansicht einer selbsttragenden Sperrschicht gemäß einer exemplarischen Ausführungsform.
- FIG. 4B: ist eine schematische isometrische Ansicht der selbsttragenden Sperrschicht, nachdem diese in eine Form überführt wurde, welche der Außenkontur des herzustellenden Formkörpers entspricht.
- FIG. 4C: ist eine schematische isometrische Ansicht der selbsttragenden Sperrschicht mit einer Klebeschicht gemäß einer exemplarischen Ausführungsform.
- FIG. 4D: ist eine schematische isometrische Ansicht eines Bezugmaterials, welches gemäß einer exemplarischen Ausführungsform auf die Sperrschicht aufgebracht wird.
- FIG. 4E: ist eine schematische isometrische Ansicht eines Vorverbundes gemäß einer exemplarischen Ausführungsform, welches das Bezugsmaterial und die Sperrschicht aufweist.
- FIG. 4F: ist eine schematische Querschnittansicht des Vorverbundes gemäß einer exemplarischen Ausführungsform.
- FIG. 4G: ist eine schematische Querschnittsansicht eines Formwerkzeuges beim Ausbilden des Formkörpers gemäß einer exemplarischen Ausführungsform.
- FIG. 4H: ist eine schematische Querschnittsansicht des Formkörpers gemäß einer exemplarischen Ausführungsform.
- FIG. 5A: ist eine schematische perspektivische Ansicht der Sperrschicht in der Form, welche der äußeren Kontur eines Formkörpers gemäß einer exemplarischen Ausführungsform entspricht.
- FIG. 5B: ist eine schematische isometrische Ansicht der Sperrschicht mit einer an ausgewählte Bereiche der Sperrschicht angeordneten Klebeschicht.
- FIG. 5C: ist eine schematische isometrische Ansicht eines Bezugsmaterials, welches gemäß einer exemplarischen Ausführungsform auf die Sperrschicht aufgebracht wird.
- FIG. 5D: ist eine schematische isometrische Ansicht eines Vorverbundes, welcher die Sperrschicht und das Bezugsmaterial aufweist.
- FIG. 5E: ist eine schematische Querschnittsansicht eines Formwerkzeuges beim Ausbilden des Formkörpers gemäß einer exemplarischen Ausführungsform.
- FIG. 5F: ist eine schematische Querschnittsansicht des Formkörpers gemäß einer exemplarischen Ausführungsform.
- FIG. 6A: ist eine schematische Querschnittsansicht eines Bezugsmaterials, welches an einer Sperrschicht gemäß einer exemplarischen Ausführungsform fixiert ist.
- FIG. 6B: ist eine schematische isometrische Ansicht einer Anlage zum Ausbilden eines Vorverbundes gemäß eines exemplarischen Ausführungsform.
- FIG. 6C: ist eine schematische Querschnittsansicht des Vorverbundes gemäß einer exemplarischen Ausführungsform.
- FIG. 6D: ist eine schematische isometrische Ansicht des Vorverbundes gemäß einer exemplarischen Ausführungsform.
- FIGS. 7A und 7B: sind schematische Ablaufdiagramme von Verfahren zum Ausbilden eines Formkörpers gemäß einer exemplarischen Ausführungsform.
- FIGS. 8A und 8B: sind schematische Ablaufdiagramme von Verfahren zum Ausbilden eines Formkörpers gemäß einer exemplarischen Ausführungsform.
- FIGS. 9A und 9B: sind schematische Ablaufdiagramme von Verfahren zum Ausbilden eines Formkörpers gemäß einer exemplarischen Ausführungsform.
- FIGS. 10A bis 10C: sind schematische Ablaufdiagramme von Verfahren zum Ausbilden eines Formkörpers gemäß einer exemplarischen Ausführungsform.

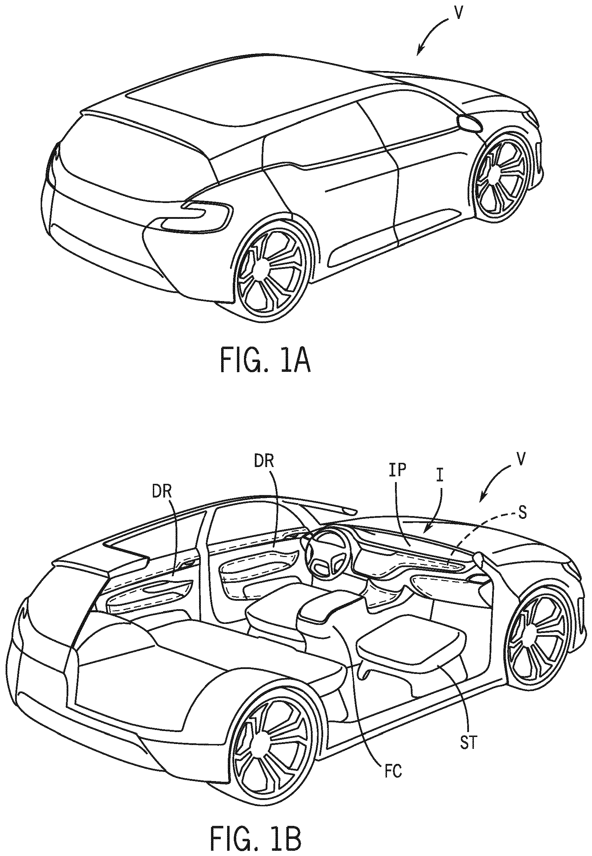

FIG. 1A zeigt exemplarisch ein Fahrzeug V, in welchem Innenausstattungsteile gemäß der vorliegenden Erfindung zum Einsatz kommen können. FIG. 1B zeigt das Fahrzeug V in einer teilgeschnittenen Ansicht, so dass unterschiedliche Innenausstattungsteile, wie etwa eine Türkonsole DR, eine Konsole FC, ein Fahrzeugsitz ST oder ein Armaturenbrett IP, sichtbar sind. Diese Innenausstattungsteile weisen in der Regel eine Vielzahl von Nähte S auf.

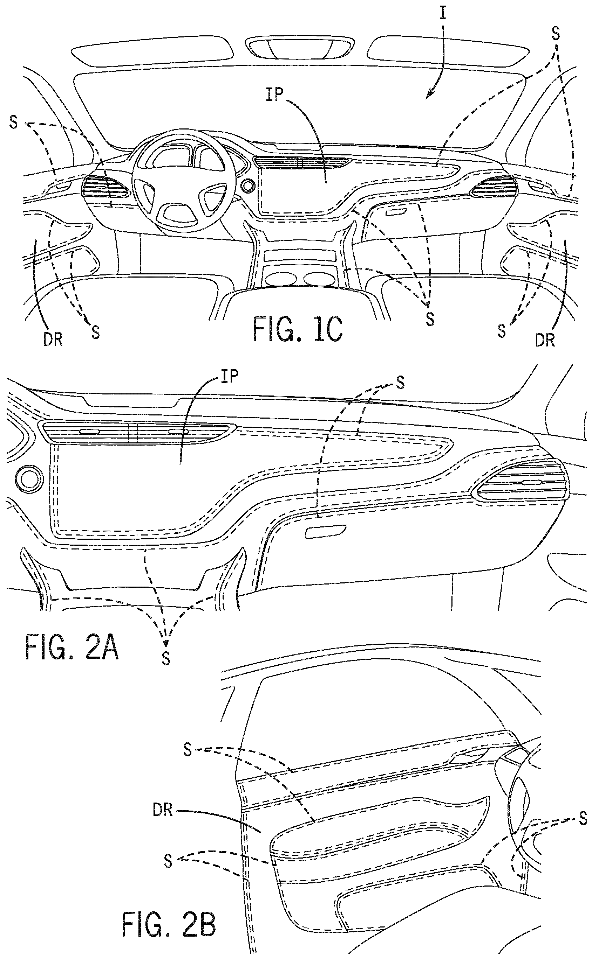

FIGS. 1C ist eine schematische isometrische Ansicht eines Fahrzeuginneren I gemäß einer exemplarischen Ausführungsform, während FIGS. 2A und 2B schematische isometrische Detailansichten des Fahrzeuginneren I gemäß einer exemplarischen Ausführungsform sind.

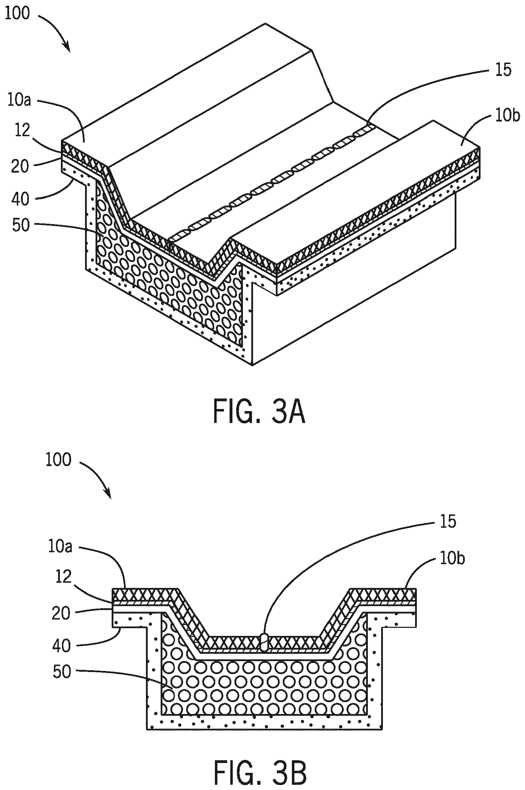

FIG. 3A ist eine schematische isometrische Ansicht eines Formkörpers 100 für das Fahrzeuginnere I gemäß einer exemplarischen Ausführungsform, während FIG. 3B die exemplarische Ausführungsform des Formkörpers 100 gemäß FIG. 3A in einer Querschnittsansicht zeigt.

Wie schematisch dargestellt, handelt es sich bei der exemplarischen Ausführungsform des Formkörpers 100 um einen mehrschichtigen Formkörper 100, welcher sich insbesondere als Innenausstattungsteil für Fahrzeuge eignet.

Der Formkörper 100 weist eine selbsttragende Sperrschicht 20 auf, auf deren Oberfläche eine Klebeschicht 12 aufgebracht ist. Diese Klebeschicht 12 dient dazu, ein Bezugsmaterial 10a, 10b auf der Oberfläche der selbsttragenden Sperrschicht 20 zu fixieren. Das Bezugsmaterial 10a, 10b besteht in diesem Fall aus zwei Materialstücken, die mit Hilfe einer Naht 15 miteinander verbunden sind.

Des Weiteren ist den Darstellungen in FIGS. 3A und 3B zu entnehmen, dass die selbsttragende Sperrschicht 20 mit einem Kunststoffmaterial 50 hinterschäumt ist. Darüber hinaus weist der Formkörper 100 ein Trägerelement 40 auf.

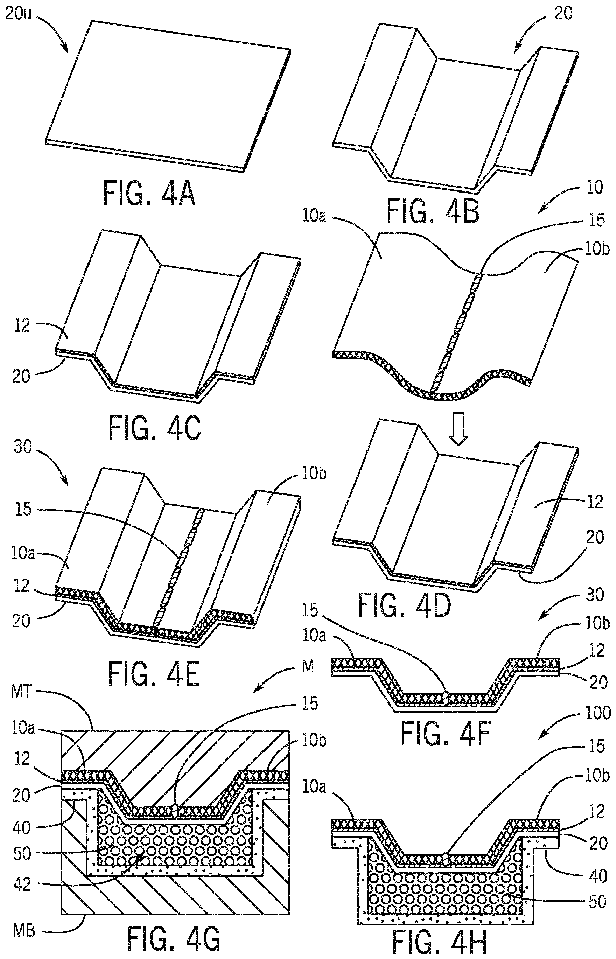

Nachfolgend wird unter Bezugnahme auf die Darstellungen in den FIGS. 4A bis 4H eine exemplarische Ausführungsform für ein Verfahren zum Herstellen eines Formkörpers 100 gemäß der vorliegenden Erfindung beschrieben.

Wie in FIG. 4A dargestellt, dient als Ausgangspunkt für das Herstellungsverfahren eines mehrschichtigen Formkörpers eine Materialschicht 20u, welches die Funktion einer selbsttragenden Sperrschicht übernimmt. Diese selbsttragende Sperrschicht 20u ist für den im Laufe des Herstellungsverfahren verwendeten, geschäumten Kunststoff 50 - wie beispielsweise TUR-Schaum - undurchdringbar. Hierzu kann die Sperrschicht 20u beispielsweise aus einer geschäumten Folie aus Polyolefin oder Polystyrol gebildet sein.

Wie in FIG. 4B angedeutet, wird die selbsttragende Sperrschicht 20u mit einer speziellen Form versehen, welche der Außenkontur des herzustellenden Formkörpers 100 entspricht. Beispielsweise kann es sich dabei um die Außenkontur eines Instrumententrägers, einer Türverkleidung, einer Mittelkonsole, oder ähnlichen Innenausstattungsteilen von Fahrzeugen handeln. Mit anderen Worten, die selbsttragende Sperrschicht 20u wird gemäß FIG. 4B vorgeformt, wobei die vorgeformte selbsttragende Sperrschicht dann mit der Bezugsziffer "20" bezeichnet wird.

Dies erfolgt bevor die vorgeformte, selbsttragende Sperrschicht 20 in das Schäumwerkzeug eingebracht wird.

Das Vorformen erfolgt beispielsweise durch Tiefziehen der oben genannten Folie aus Polyolefin oder Polystyrol. Beispielhaft wurde die hier dargestellte Sperrschicht 20 mit einer Vertiefung ausgebildet, welche im Querschnitt dargestellt ist. Selbstverständlich ist die dargestellte Form der Sperrschicht jedoch nicht als einschränkend anzusehen.

In einem weiteren, in FIG. 4C dargestellten Schritt wird eine Klebeschicht 12 auf die Oberfläche der selbsttragenden Sperrschicht 20 aufgebracht. Die Klebeschicht 12 wird dabei insbesondere auf die spätere Außenseite der Sperrschicht 20, welche mit dem Bezugsmaterial verbunden wird, aufgebracht. Selbstverständlich ist es auch möglich, dass die geschäumte Folie zum Herstellen der Sperrschicht 20 bereits bei der Herstellung eine Klebeschicht 12 aufweist und somit direkt nach dem Verformen (bspw. durch Tiefziehen) mit dem Bezugsmaterial 10 verbunden werden kann, wie dies im nächsten Schritt gemäß FIG. 4D erläutert werden wird.

Der FIG. 4D ist ein schematischer Querschnitt durch ein Bezugsmaterial 10 zu entnehmen, welches beispielsweise aus Leder bzw. Kunstleder gefertigt ist. Das Bezugsmaterial 10 besteht gemäß der dargestellten Ausführungsform aus zwei Einzelteilen 10a, 10b, welche über eine Verbindungsnaht 15 aneinander befestigt sind. Selbstverständlich ist die Erfindung nicht auf die in den Zeichnungen dargestellte Anzahl von Verbindungsnähten beschränkt. Vielmehr ist es durchaus denkbar, dass das Bezugsmaterial 10 keine bzw. eine Vielzahl von Verbindungs- bzw. Ziernähten aufweist.

Das oben beschriebene Bezugsmaterial 10 wird, wie durch den Pfeil in FIG. 4D angedeutet, mit seiner Rückseite auf die selbsttragende Sperrschicht 20 aufgebracht und über die Klebeschicht 12 mit dieser fixiert. Dabei ist es vorgesehen, dass das Bezugsmaterial 10 entlang mindestens eines Teilbereichs seiner Rückseite derart mit der selbsttragenden Sperrschicht 20 verklebt wird, dass ein Vorverbund 30 zwischen der Sperrschicht 20 und dem Bezugsmaterial 10 entsteht, welcher beispielsweise in der FIG. 4E dargestellt ist. Somit befindet sich das Bezugsmaterial 10 bereits vor dem Einbringen in das Schäumwerkzeug M (FIG. 4G) in einer Form, welcher der späteren Außenkontur des herzustellenden, mehrschichtigen Formkörpers entspricht.

Wie es oben bereits erwähnt wurde, kann es sich bei der Klebeschicht 12 insbesondere um einen thermisch aktivierbaren Klebstoff, wie beispielsweise einen Thermoharz handeln, welcher zunächst nur eine leichte Verbindung zwischen der selbsttragenden Sperrschicht 20 und dem Bezugsmaterial 10 herstellt. Demnach wird die endgültige Verbindung zwischen der Sperrschicht 20 und dem Bezugsmaterial 10 erst beim Hinterschäumen innerhalb des Schäumwerkzeugs M erreicht, da hierbei Temperaturen auftreten, welche der Verarbeitungstemperatur der Klebeschicht 12 entsprechen.

Der Verfahrensschritt zum Hinterschäumen des Vorverbunds 30 kann der FIG. 4G dem Prinzip nach entnommen werden. Aus dieser Darstellung ist zu entnehmen, dass der Vorverbund 30 aus Sperrschicht 20 und Bezugsmaterial 10 in ein Schäumwerkzeug M eingelegt wird. Das Schäumwerkzeug M weist der gemäß der dargestellten Ausführungsform einen oberen Werkzeugteil MI sowie einen unteren Werkzeugteil MB auf, zwischen welchen der Vorverbund 30 eingespannt wird. Zwischen der Sperrschicht 20 und dem unteren Werkzeugteil MB ist ferner ein Trägerelement 40 angeordnet, welches durch das hinterschäumte Bezugsmaterial kaschiert werden soll. Die beiden Teile MT, MB des Schäumwerkzeugs M bilden auf der Rückseite des Vorverbunds 30, d. h. auf der Rückseite der Sperrschicht 20 eine Schäumkammer 42 aus, an deren Unterseite das Trägerelement 40 angeordnet ist. Die Schäumkammer 42 kann beispielsweise über einen nicht dargestellten, lateralen Einfüllkanal mit geschäumtem Kunststoff 50, wie beispielsweise PUR-Schaum, befüllt werden. Im Einzelnen kann es sich bei dem geschäumten Kunststoff um einen durch CO₂ betriebenen Polyurethan-Formschaum handeln, welcher beim Einschäumen in die Schäumkammer 42 einen Schaumdruck verursacht, der die selbsttragende Sperrschicht 20 über das Bezugsmaterial 10 auf das obere Teil MT des Schäumwerkzeugs 11 drückt. Gleichzeitig erzielt der PUR-Schaum beim Einschäumen in die Schäumkammer 42 eine Temperatur, welche in etwa der Aktivierungstemperatur der Klebeschicht 12 entspricht, sodass durch den Druck und die Temperatur des geschäumten Kunststoffs 50 eine endgültige Verbindung zwischen der Sperrschicht 20 und dem Bezugsmaterial 10 entsteht.

Da die Sperrschicht 20 für den geschäumten Kunststoff 50 undurchdringbar ist, wird wirkungsvoll verhindert, dass der geschäumte Kunststoff zu tief in die Poren des Bezugsmaterials 10 eindringt bzw. durch die Verbindungsnaht 15 diffundiert. Nachdem der geschäumte Kunststoff 50 abgekühlt und ausgehärtet ist, verbindet dieser den Vorverbund 30 aus dem Bezugsmaterial 10 und der Sperrschicht 20 dauerhaft mit dem Trägerelement 40, sodass eine mehrschichtiger Formkörper 100 (z.B. ein Instrumententräger) entsteht (vgl. FIG. 4H).

Wie oben bereits angedeutet, wird durch den Vorverbund 30, welcher bereits vor dem Einbringen in das Schäumwerkzeug M erzeugt wird, erreicht, dass das Bezugsmaterial 10 beim Hinterschäumen nicht verrutschen kann, wodurch unerwünschte Unebenheiten auf der Oberfläche des mehrschichtigen Formkörpers 100 verhindert werden.

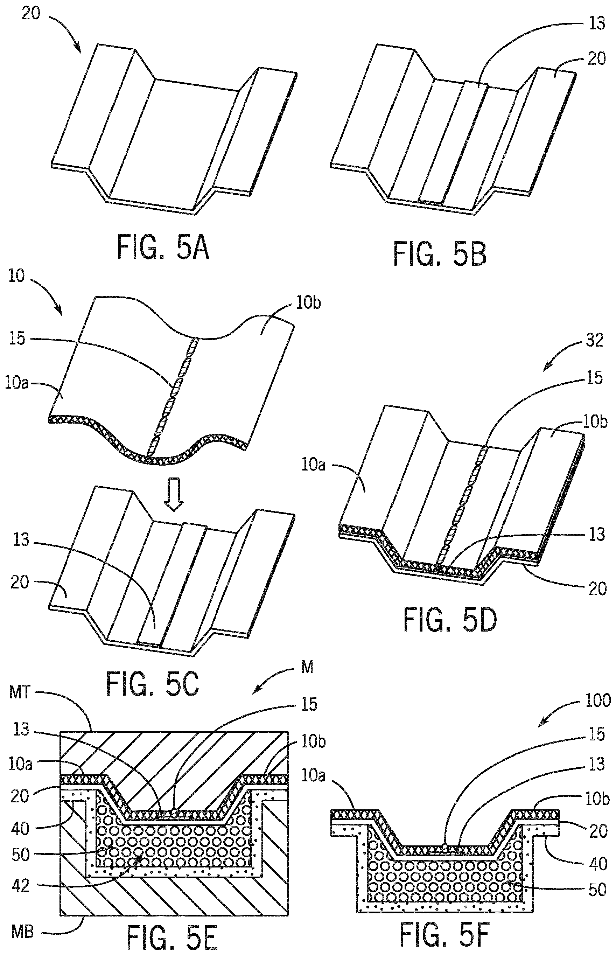

Eine zweite Ausführungsform des erfindungsgemäßen Verfahrens zum Herstellen von mehrschichtigen Formkörpern ist den FIGS. 5A bis 5F zu entnehmen. Das Verfahren gemäß der zweiten Ausführungsform entspricht im Wesentlichen dem Verfahren gemäß der ersten Ausführungsform, wobei das Bezugsmaterial 10 in diesem Fall jedoch ausschließlich entlang seiner Verbindungsnaht 15 mit der selbsttragenden Sperrschicht 20 verbunden wird. Dementsprechend befindet sich in den Darstellungen gemäß den FIGS. 5B bis 5F nur an denjenigen Teilbereichen der Sperrschicht 20 eine Klebeschicht 13, an welchen die Nahtbereiche 15 des Bezugsmaterials 10 fixiert werden sollen. Zwar ist in den Darstellungen gemäß FIG. 5A bis 5F lediglich eine Naht 15 zu entnehmen, jedoch ist es in der Praxis selbstverständlich üblich, eine Vielzahl verschiedener Verbindungs- bzw. Ziernähte vorzusehen, welche gemäß der zweiten Ausführungsform jeweils über eine Klebeschicht 13 mit der Sperrschicht 20 verbunden sind.

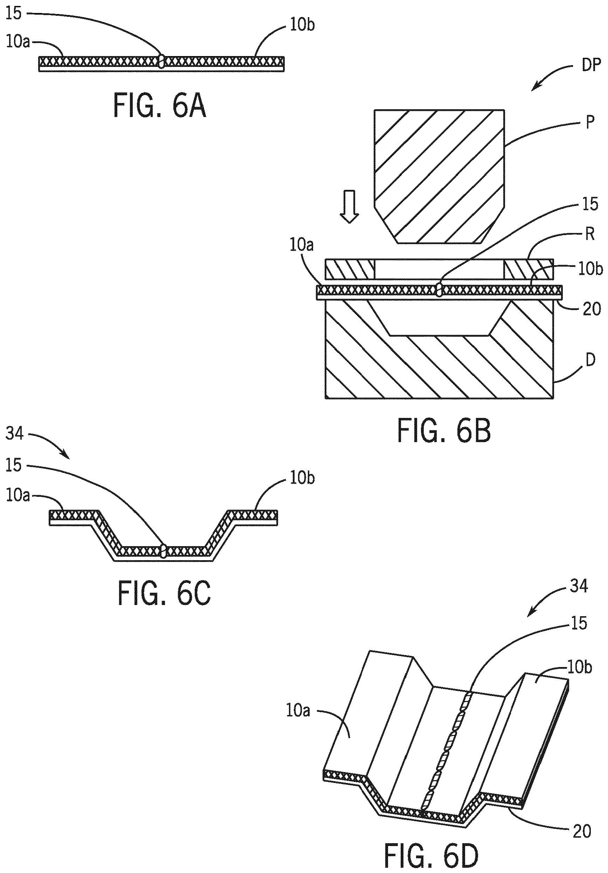

In den FIGS. 6A bis 6D ist eine dritte Ausführungsform des erfindungsgemäßen Verfahrens dargestellt. Diese Ausführungsvariante unterscheidet sich von den ersten beiden Ausführungsformen insbesondere dadurch, dass die selbsttragende Sperrschicht 20 selbstklebend ausgebildet ist. Dementsprechend entfällt der in den Schritt zum Aufbringen einer separaten Klebeschicht 12 bzw. 13 auf die Oberfläche der Sperrschicht 20.

Die Sperrschicht 20 gemäß der dritten Ausführungsform ist vorzugsweise derart selbstklebend ausgebildet, dass das Bezugsmaterial 10 direkt während eines Tiefziehprozesses mit der Sperrschicht 20 verbunden werden kann. Ein derartiger Tiefziehprozess, welcher insbesondere auch als Thermoformen bekannt ist, ist in der FIG. 6B schematisch dargestellt. Demnach wird Bezugsmaterial 10 zunächst auf der Oberfläche der Sperrschicht 20 positioniert und Mittels einer Thermoformwerkzeugs DP mit der selbstklebenden Sperrschicht 20 verbunden. Die Sperrschicht 20 ist zu diesem Zweck insbesondere aus einem selbstklebenden thermoplastischen Kunststoff, wie bspw. Polypropylen, ausgebildet. Innerhalb des Thermoformwerkzeugs DP werden die Sperrschicht 20 und das Bezugsmaterial 10 zwischen einem federgespannten Spannelement P und einem Unterteil D eingespannt. Sodann wird zumindest die Sperrschicht 20 soweit erhitzt, bis diese ihre Haftwirkung entwickelt. In einem weiteren Schritt werden die Sperrschicht 20 und das Bezugsmaterial 10 durch ein Stempelelement P in eine Ausbuchtung des Unterteils D gepresst, wobei einerseits die oben erwähnte Außenkontur der Sperrschicht 20 geformt wird und gleichzeitig eine feste Verbindung zwischen der Sperrschicht 20 und dem Bezugsmaterial 10 entsteht.

Gemäß der dritten Ausführungsform, entsteht eine Vorverbund 34 aus der Sperrschicht 20 und dem Bezugsmaterial 10, wie dieses schematisch aus der FIG. 6C zu erkennen ist. Der so erhaltene Vorverbund 34 wird sodann in ein Schäumwerkzeug eingebracht und zu einem mehrschichtigen Formkörper verbunden.

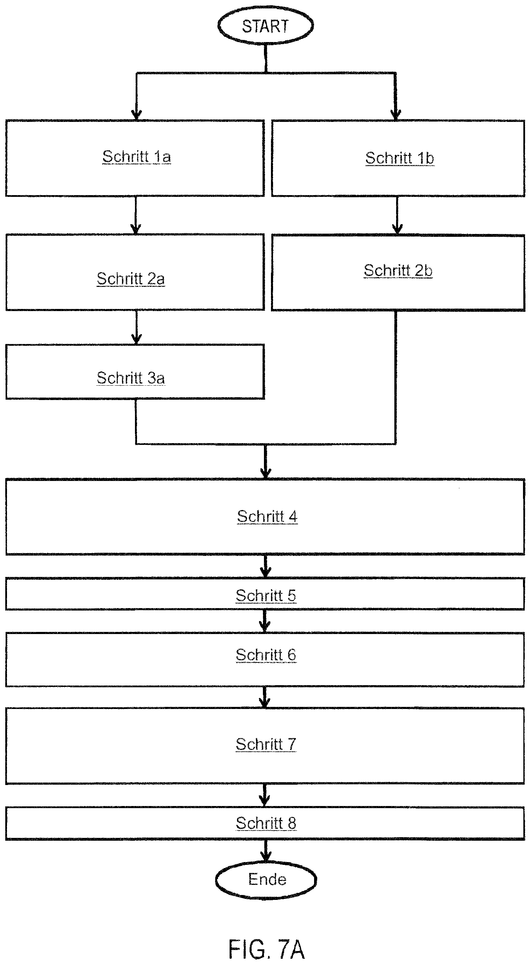

In den FIGS. 7A, 7B, 8A, 8B, 9A, 9B, und 10A bis 10C sind jeweils schematische Ablaufdiagramme von Verfahren zum Ausbilden eines Formkörpers gemäß exemplarischen Ausführungsformen gezeigt.

In FIG. 7a haben die dort angegebenen Schritte die folgende Bedeutung:

| | |
|---|---|
| Schritt 1a | Bereitstellen einer Sperrschicht in zwei-dimensionaler Form |
| Schritt 2a | Verformen der Sperrschicht, so dass sie einer drei-dimensionalen Form entspricht |
| Schritt 3a | Anwenden einer Klebeschicht auf die Sperrschicht |
| Schritt 1b | Bereitstellen eines Bezugsmaterials in zwei-dimensionaler Form |
| Schritt 2b | Kombinieren von Segmente des Bezugsmaterials in einer drei-di-mensionalen Form |
| Schritt 4 | Vorfixieren des Bezugsmaterials auf der Sperrschicht (in bestimmten Bereichen) zum Ausbilden eines Vorverbunds |
| Schritt 5 | Anordnen des Vorverbunds in einem Werkzeug |
| Schritt 6 | Einspritzen von Kunststoff in das Werkzeug, und zwar hinter den Vorverbund |
| Schritt 7 | Aktivieren der Klebeschicht an der Sperrschicht in dem Werkzeug, um das Bezugsmaterial an der Sperrschicht zu befestigen |
| Schritt 8 | Ausbilden des Formkörpers |

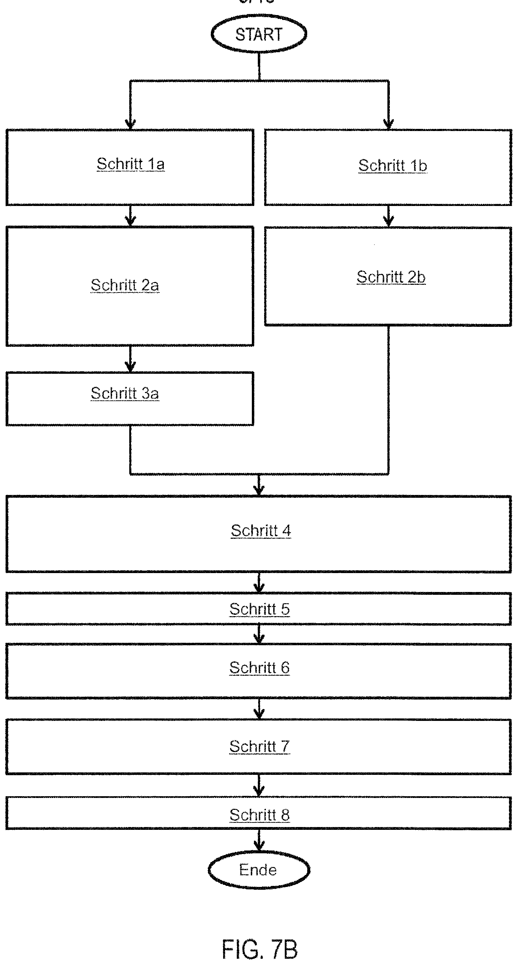

In FIG. 7b haben die dort angegebenen Schritte die folgende Bedeutung:

| | |
|---|---|
| Schritt 1a | Bereitstellen einer Sperrschicht in zwei-dimensionaler Form |
| Schritt 2a | Verformen der Sperrschicht, so dass sie einer drei-dimensionalen Form entspricht |
| Schritt 1b | Bereitstellen eines Bezugsmaterials (Segment oder Segmente) in zwei-dimensionaler Form |
| Schritt 2b | Kombinieren von Segmente des Bezugsmaterials in einer drei-dimensionalen End-Form |
| Schritt 3 | Anwenden eines Klebers auf Außenfläche der Sperrschicht |
| Schritt 4 | Vorfixieren des Bezugsmaterials aus der drei-dimensionalen Sperrschicht (durch Aktivieren von Kleber in bestimmten Bereichen) zum Ausbilden eines drei-dimensionalen Vorverbunds |
| Schritt 5 | Anordnen von Vorverbund und Stützelement in einem Werkzeug |
| Schritt 6 | Einspritzen von Kunststoff in das Werkzeug, und zwar zwischen den Vorverbund und das Stützelement |
| Schritt 7 | (thermisches) Aktivieren des Klebers durch die Sperrschicht in dem Werkzeug, um Bezugsmaterial an Sperrschicht zu befestigen |
| Schritt 8 | Ausbilden des Formkörpers |

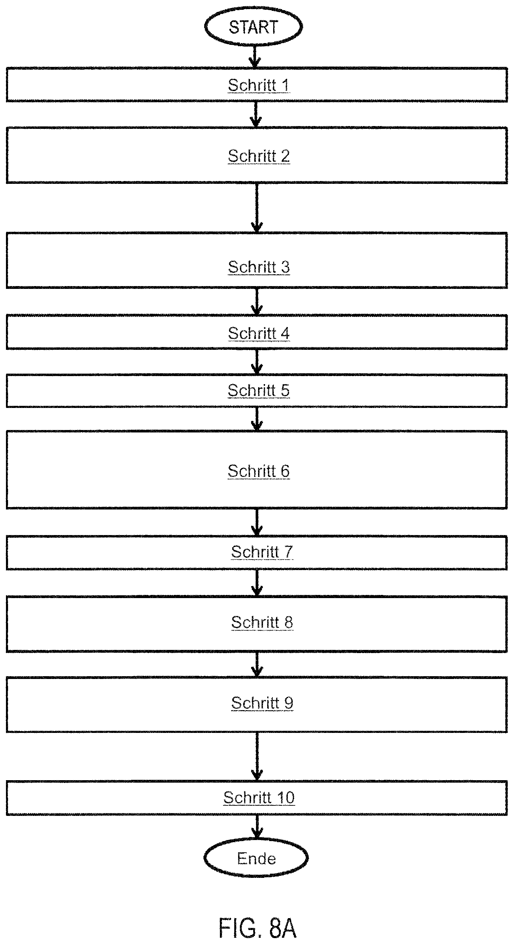

In FIG. 8a haben die dort angegebenen Schritte die folgende Bedeutung:

| | |
|---|---|
| Schritt 1 | Bereitstellen einer Sperrschicht in zwei-dimensionaler Form |
| Schritt 2 | Verformen der Sperrschicht, so dass sie einer drei-dimensionalen Form entspricht |
| Schritt 3 | Bereitstellen eines Bezugsmaterials (Segment oder Segmente) in zwei-dimensionaler Form |
| Schritt 4 | Kombinieren von Segmente des Bezugsmaterials |
| Schritt 5 | Anwenden einer Klebeschicht auf die Sperrschicht |
| Schritt 6 | Vorfixieren des Bezugsmaterials auf der Sperrschicht (in bestimmten Bereichen) zum Ausbilden eines Vorverbunds |
| Schritt 7 | Anordnen des Vorverbunds in einem Werkzeug |
| Schritt 8 | Einspritzen von Kunststoff in das Werkzeug, und zwar hinter den Vorverbund |
| Schritt 9 | Aktivieren der Klebeschicht an der Sperrschicht in dem Werkzeug, um das Bezugsmaterial an der Sperrschicht zu befestigen |
| Schritt 10 | Ausbilden des Formkörpers |

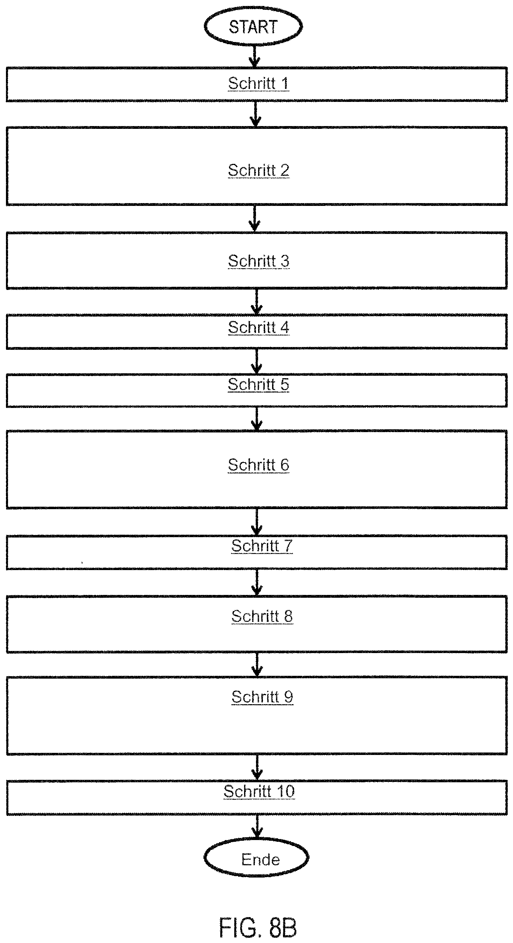

In FIG. 8b haben die dort angegebenen Schritte die folgende Bedeutung:

| | |
|---|---|
| Schritt 1 | Bereitstellen einer Sperrschicht in zwei-dimensionaler Form |
| Schritt 2 | Verformen der Sperrschicht, so dass sie einer drei-dimensionalen End-Form entspricht |
| Schritt 3 | Bereitstellen eines Bezugsmaterials (Segment oder Segmente) in zwei-dimensionaler Form |
| Schritt 4 | Vernähen von Segmenten des Bezugsmaterials |
| Schritt 5 | Anwenden eines Klebers auf Außenfläche der Sperrschicht |
| Schritt 6 | Vorfixieren des Bezugsmaterials auf der drei-dimensionalen Sperrschicht (durch Aktivieren von Kleber in bestimmten Bereichen) zum Ausbilden eines Vorverbunds |
| Schritt 7 | Anordnen von Vorverbund und Stützelement in einem Werkzeug |
| Schritt 8 | Einspritzen von Kunststoff in das Werkzeug, und zwar zwischen den Vorverbund und das Stützelement |
| Schritt 9 | (thermisches) Aktivieren des Klebers durch die Sperrschicht in dem Werkzeug, um Bezugsmaterial an Sperrschicht zu befestigen |
| Schritt 10 | Ausbilden des Formkörpers |

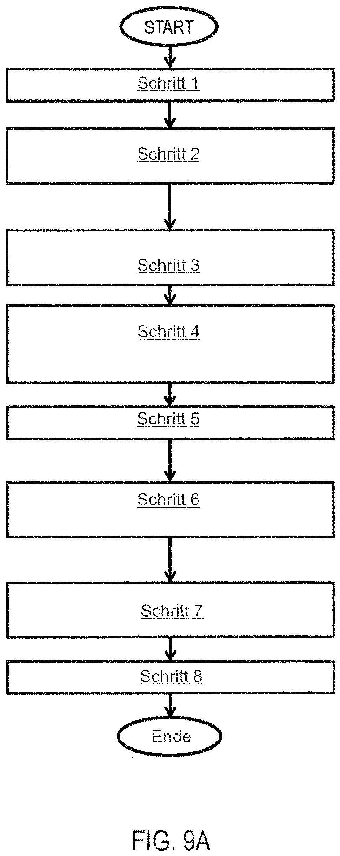

In FIG. 9a haben die dort angegebenen Schritte die folgende Bedeutung:

| | |
|---|---|
| Schritt 1 | Bereitstellen einer Sperrschicht |
| Schritt 2 | Verformen der Sperrschicht, so dass sie dem Formkörper entspricht |
| Schritt 3 | Anwenden einer Klebeschicht auf die Sperrschicht |
| Schritt 4 | Vorfixieren des Bezugsmaterials auf der Sperrschicht zum Ausbilden eines Vorverbunds |
| Schritt 5 | Vorverbund in Werkzeuganordnen |
| Schritt 6 | Einspritzen von Kunststoff in das Werkzeug, und zwar hinter den Vorverbund |
| Schritt 7 | Klebeschicht im Werkzeugaktivieren zum Befestigen Bezugsmaterial an Sperrschicht |
| Schritt 8 | Ausbilden des Formkörpers |

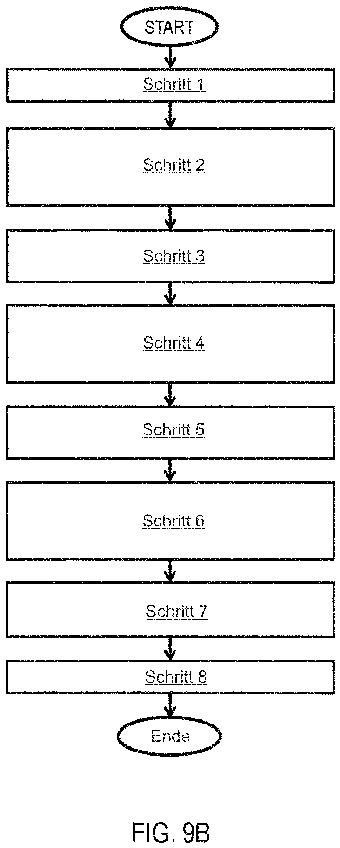

In FIG. 9b haben die dort angegebenen Schritte die folgende Bedeutung:

| | |
|---|---|
| Schritt 1 | Bereitstellen einer Sperrschicht |
| Schritt 2 | Verformen der Sperrschicht, so dass sie der Außenkontur des fertigen Formkörpers entspricht |
| Schritt 3 | Anwenden eines Klebers auf Außenfläche der Sperrschicht |
| Schritt 4 | Vorfixieren des Bezugsmaterials auf der Sperrschicht zum Ausbilden eines Vorverbunds |
| Schritt 5 | Anordnen von Vorverbund und Stützelement in einem Werkzeug |
| Schritt 6 | Einspritzen von Kunststoffschaum in das Werkzeug, und zwar zwischen den Vorverbund und das Stützelement |
| Schritt 7 | Klebeschicht im Werkzeugaktivieren zum Befestigen Bezugsmaterial an Sperrschicht |
| Schritt 8 | Ausbilden des Formkörpers |

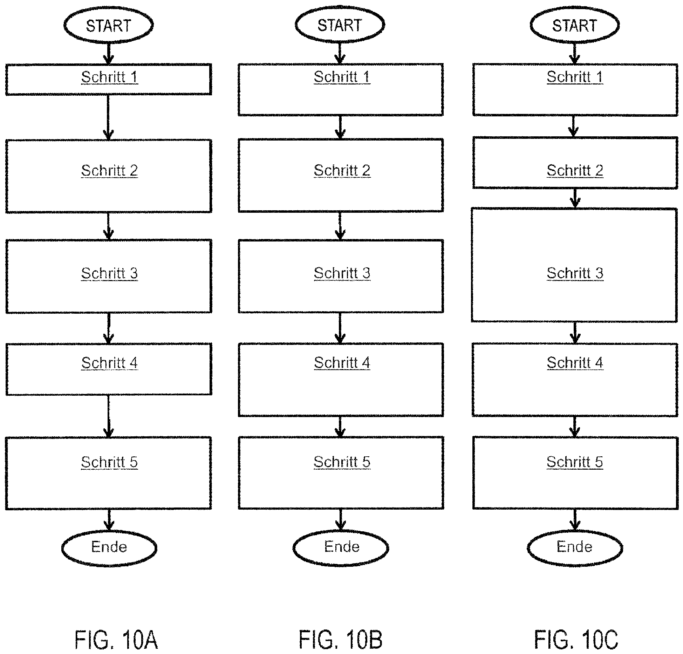

In FIG. 10a haben die dort angegebenen Schritte die folgende Bedeutung:

| | |
|---|---|
| Schritt 1 | Sperrschicht bereitstellen |
| Schritt 2 | Anwenden eines Klebers auf Oberfläche der Sperrschicht |
| Schritt 3 | Verbinden von Bezugsmaterial mit Sperrschicht zum Bilden eines Vorverbunds |
| Schritt 4 | Vorverbund in Werkzeuganordnen |
| Schritt 5 | Einspritzen von Kunststoffschaum in Werkzeug zum Bilden des Formkörpers |

In FIG. 10b haben die dort angegebenen Schritte die folgende Bedeutung:

| | |
|---|---|
| Schritt 1 | Sperrschicht bereitstellen |
| Schritt 2 | Anwenden eines Klebers auf Oberfläche der Sperrschicht |
| Schritt 3 | Verbinden von Bezugsmaterial mit Sperrschicht zum Bilden eines Vorverbunds |
| Schritt 4 | Vorverbund und Stützelement in Werkzeuganordnen |
| Schritt 5 | Einspritzen von Kunststoffschaum in Werkzeug zum Bilden des Formkörpers |

In FIG. 10c haben die dort angegebenen Schritte die folgende Bedeutung:

| | |
|---|---|
| Schritt 1 | Sperrschicht bereitstellen |
| Schritt 2 | Verbinden von Bezugsmaterial mit Sperrschicht |
| Schritt 3 | Thermoform-Prozess an Bezugsmaterial und Sperrschicht zum Bilden eines Vorverbunds |
| Schritt 4 | Vorverbund und Stützelement in Werkzeuganordnen |
| Schritt 5 | Einspritzen von Kunststoffschaum in Werkzeug zum Bilden des Formkörpers |

Die vorliegende Erfindung ist nicht auf die in den Figuren dargestellten, exemplarischen Ausführungsformen beschränkt, sondern ergibt sich aus einer Kombination sämtlicher hierin offenbarter Merkmale.

## Patentansprüche

1. Verfahren zur Herstellung von mehrschichtigen Formkörpern, insbesondere von Innenausstattungsteilen für Fahrzeuge, bei welchen auf eine Rückseite eines Bezugsmaterials (10, 10a, 10b) ein geschäumter Kunststoff (50) aufgebracht wird, wobei das Verfahren die folgenden Schritte aufweist:
- Herstellen einer selbsttragenden Sperrschicht (20u, 20), welche für den geschäumten Kunststoff (50) undurchdringbar ist;
- Aufbringen und Fixieren des Bezugsmaterials (10, 10a, 10b) mit zumindest einem Teilbereich der Rückseite auf der selbsttragenden Sperrschicht (20) derart, dass ein Vorverbund (30, 34) zwischen der Sperrschicht (20) und dem Bezugsmaterial (10, 10a, 10b) entsteht;
- Einbringen des Vorverbunds (30, 34) aus Sperrschicht (20) und Bezugsmaterial (10, 10a, 10b) in ein Schäumwerkzeug (M) derart, dass die Sperrschicht (20) zwischen dem Bezugsmaterial (10, 10a, 10b) und einer Schäumkammer (42) des Schäumwerkzeugs (M) angeordnet ist; und
- Einbringen von geschäumtem Kunststoff (50) in die Schäumkammer (42) des Schäumwerkszeugs (M),
wobei die Sperrschicht (20) in einer Form hergestellt wird, welche im Wesentlichen der Außenkontur des zu fertigenden Formkörpers (100) entspricht; und
wobei das Bezugsmaterial (10, 10a, 10b) mindestens eine Verbindungs- und/oder Ziernaht (15) aufweist, und wobei eine Fixierung des Bezugsmaterials an der Sperrschicht (20) vorzugsweise ausschließlich entlang der Verbindungs- bzw. Ziernaht (15) erfolgt.

2. Verfahren nach Anspruch 1, wobei die Sperrschicht (20) aus einer thermisch tiefgezogenen Folie gebildet wird.

3. Verfahren nach Anspruch 2, wobei die Sperrschicht (20) aus einer geschäumten Folie, vorzugsweise aus Polyolefin oder Polystyrol (PET, PE, PP, PS), gebildet ist.

4. Verfahren nach Anspruch 2 oder 3, wobei die Sperrschicht (20) derart selbstklebend ausgebildet wird, dass sich die Sperrschicht (20) während dem Tiefziehprozess mit dem Bezugsmaterial verbindet.

5. Verfahren nach einem der Ansprüche 1 bis 3, wobei die Fixierung zwischen der Sperrschicht (20) und dem Bezugsmaterial (10, 10a, 10b) durch mindestens eine Klebeschicht (12, 13) erzeugt wird.

6. Verfahren nach Anspruch 5, wobei die eine selbsttragende Sperrschicht (20), vor der Erzeugung des Vorverbunds (30, 34), zumindest bereichsweise mit der Klebeschicht (12, 13) beschichtet wird.

7. Verfahren nach Anspruch 5 oder 6, wobei als Klebeschicht (12, 13) eine über eine vorbestimmbare Aktivierungstemperatur aktivierbare Klebeschicht (12, 13) verwendet wird.

8. Verfahren nach Anspruch 7, wobei aktivierbare Klebeschicht (12, 13) eine Aktivierungstemperatur aufweist, welche einer Reaktionstemperatur des geschäumten Kunststoffs (50) entspricht.

9. Verfahren nach einem der Ansprüche 1 bis 8, wobei die Positionierung der Verbindungs- bzw. Ziernaht auf der Sperrschicht (20) mit Hilfe mindestens eines Nahtschwerts und/oder mit Hilfe von optischen Sensoren erfolgt.

10. Verfahren nach einem der Ansprüche 1 bis 9, wobei als Bezugsmaterial (10, 10a, 10b) natürliches Leder und/oder Kunstleder verwendet wird.

11. Verfahren nach einem der Ansprüche 1 bis 10, wobei der geschäumte Kunststoff (50) aus einem CO₂ getriebenen Polyurethan-Formschaum gebildet ist.

12. Mehrschichtiger Formkörper, insbesondere Innenausstattungsteil für Fahrzeuge, mit mindestens einem auf einem geschäumten Kunststoff (50) angebrachten Bezugsmaterial (10, 10a, 10b), **dadurch gekennzeichnet, dass** der Formkörper nach dem Verfahren gemäß einem der Ansprüche 1 bis 11 hergestellt wurde.

## Claims

1. A method for producing multilayer molded bodies, particularly interior fittings for vehicles, in which a foamed plastic (50) is applied to a reverse side of a cover material (10, 10a, 10b), wherein the method comprises the following steps:
- producing a self-supporting barrier layer (20u, 20) which is impenetrable to the foamed plastic (50);
- applying and fixing at least part of the reverse side of the cover material (10, 10a, 10b) to the self-supporting barrier layer (20) such that a pre-laminate (30, 34) is formed between the barrier layer (20) and the cover material (10, 10a, 10b);
- introducing the pre-laminate (30, 34) of barrier layer (20) and cover material (10, 10a, 10b) into a foaming mold (M) such that the barrier layer (20) is arranged between the cover material (10, 10a, 10b) and a foam chamber (42) of the foaming mold (M); and
- introducing foamed plastic (50) into the foam chamber (42) of the foaming mold (M),
wherein the barrier layer (20) is produced in a shape which substantially corresponds to the outer contour of the molded body (100) to be produced; and
wherein the cover material (10, 10a, 10b) comprises at least one joining and/or decorative seam (15), and wherein the cover material is preferably fixed to the barrier layer (20) exclusively along the joining/decorative seam (15).

2. The method according to claim 1, wherein the barrier layer (20) is formed from a thermally thermoformed film.

3. The method according to claim 2, wherein the barrier layer (20) is formed from a foamed film, preferably of polyolefin or polystyrene (PET, PE, PP, PS).

4. The method according to claim 2 or 3, wherein the barrier layer (20) is of self-adhesive design such that the barrier layer (20) joins with the cover material during the thermoforming process.

5. The method according to one of claims 1 to 3, wherein the fixation between the barrier layer (20) and the cover material (10, 10a, 10b) is produced by at least one adhesive layer (12, 13).

6. The method according to claim 5, wherein the one self-supporting barrier layer (20) is at least partially coated with the adhesive layer (12, 13) prior to the pre-laminate (30, 34) being produced.

7. The method according to claim 5 or 6, wherein an adhesive layer (12, 13) which is activatable above a predefinable activation temperature is used as the adhesive layer (12, 13).

8. The method according to claim 7, wherein the activatable adhesive layer (12, 13) exhibits an activation temperature corresponding to a reaction temperature of the foamed plastic (50).

9. The method according to one of claims 1 to 8, wherein the joining/ decorative seam is positioned on the barrier layer (20) by means of at least one seam blade and/or by means of optical sensors.

10. The method according to one of claims 1 to 9, wherein natural and/or imitation leather is used as the cover material (10, 10a, 10b).

11. The method according to one of claims 1 to 10, wherein the foamed plastic (50) is formed from a CO₂-driven polyurethane molded foam.

12. A multilayer molded body, particularly an interior fitting for vehicles, comprising at least one cover material (10, 10a, 10b) fixed to a foamed plastic (50), **characterized in that** the molded body is produced pursuant to the method according to one of claims 1 to 11.

## Revendications

1. Procédé de fabrication de corps moulés multicouches, en particulier de pièces d'équipement intérieur pour véhicules, dans lequel une matière plastique moussée (50) est appliquée sur une face arrière d'un matériau de recouvrement (10, 10a, 10b), le procédé comprenant les étapes suivantes consistant à :
- réaliser une couche barrière autoportante (20u, 20) qui est impénétrable pour la matière plastique moussée (50) ;
- appliquer et fixer le matériau de recouvrement (10, 10a, 10b) avec au moins une zone partielle de la face arrière sur la couche barrière autoportante (20) de telle sorte qu'un pré-composite (30, 34) se forme entre la couche barrière (20) et le matériau de recouvrement (10, 10a, 10b) ;
- introduire le pré-composite (30, 34) constitué de la couche barrière (20) et du matériau de recouvrement (10, 10a, 10b) dans un outil de moussage (M) de telle sorte que la couche barrière (20) est disposée entre le matériau de recouvrement (10, 10a, 10b) et une chambre de moussage (42) de l'outil de moussage (M) ; et
- introduire la matière plastique moussée (50) dans la chambre de moussage (42) de l'outil de moussage (M),
dans lequel la couche barrière (20) est réalisée dans un moule qui correspond sensiblement au contour extérieur du corps moulé (100) à fabriquer ; et
le matériau de recouvrement (10, 10a, 10b) présente au moins une couture de liaison et/ou de décoration (15), et la fixation du matériau de recouvrement à la couche barrière (20) s'effectue de préférence exclusivement le long de la couture de liaison et/ou de décoration (15).

2. Procédé selon la revendication 1, dans lequel la couche barrière (20) est formée à partir d'un film embouti par voie thermique.

3. Procédé selon la revendication 2, dans lequel la couche barrière (20) est formée d'un film moussé, de préférence en polyoléfine ou en polystyrène (PET, PE, PP, PS).

4. Procédé selon la revendication 2 ou 3, dans lequel la couche barrière (20) est rendue auto-adhésive de telle sorte que la couche barrière (20) se lie au matériau de recouvrement pendant le processus d'emboutissage.

5. Procédé selon l'une des revendications 1 à 3, dans lequel la fixation entre la couche barrière (20) et le matériau de recouvrement (10, 10a, 10b) est assurée par au moins une couche de colle (12, 13).

6. Procédé selon la revendication 5, dans lequel la couche barrière autoportante (20) est revêtue au moins localement de la couche de colle (12, 13) avant la fabrication du pré-composite (30, 34).

7. Procédé selon la revendication 5 ou 6, dans lequel une couche de colle (12, 13) qui peut être activée par une température d'activation prédéfinie est utilisée comme couche de colle (12, 13).

8. Procédé selon la revendication 7, dans lequel la couche de colle activable (12, 13) présente une température d'activation qui correspond à une température de réaction de la matière plastique moussée (50).

9. Procédé selon l'une des revendications 1 à 8, dans lequel le positionnement de la couture de liaison ou de décoration sur la couche barrière (20) est effectué à l'aide d'au moins une lame de couture et/ou à l'aide de capteurs optiques.

10. Procédé selon l'une des revendications 1 à 9, dans lequel du cuir naturel et/ou du similicuir est utilisé comme matériau de recouvrement (10, 10a, 10b).

11. Procédé selon l'une des revendications 1 à 10, dans lequel la matière plastique moussée (50) est formée à partir d'une mousse de polyuréthane moulée alimentée avec du CO2.

12. Corps moulé multicouche, en particulier pièce d'équipement intérieur pour véhicules, comportant au moins un matériau de recouvrement (10, 10a, 10b) appliqué sur une matière plastique moussée (50), **caractérisé en ce que** le corps moulé a été fabriqué selon le procédé selon l'une des revendications 1 à 11.
